(19) **Europäisches Patentamt / European Patent Office / Office européen des brevets**

(11) **EP 2 409 412 B1**

(12) **FASCICULE DE BREVET EUROPEEN**

(45) Date de publication et mention de la délivrance du brevet:
**25.06.2014 Bulletin 2014/26**

(21) Numéro de dépôt: **10708980.7**

(22) Date de dépôt: **12.03.2010**

(51) Int Cl.:
**H04B 3/28** *(2006.01)*

(86) Numéro de dépôt international:
**PCT/EP2010/053164**

(87) Numéro de publication internationale:
**WO 2010/105977 (23.09.2010 Gazette 2010/38)**

(54) **PROCEDE ET DISPOSITIF D'ANNULATION DES INTERFERENCES ENTRE UN SIGNAL PORTE PAR UNE LIGNE COURANT PORTEUR ET UN SIGNAL PORTE PAR UNE LIGNE TELEPHONIQUE**

VERFAHREN UND VORRICHTUNG ZUR INTERFERENZUNTERDRÜCKUNG ZWISCHEN EINEM STROMTRÄGERSIGNAL UND EINEM TELEFONLEITUNGSIGNAL

METHOD AND APPARATUS FOR INTERFERENCE CANCELLATION BETWEEN A POWER LINE CARRIER SIGNAL AND A TELEPHONE LINE SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.03.2009 FR 0951738**

(43) Date de publication de la demande:
**25.01.2012 Bulletin 2012/04**

(73) Titulaire: **SAGEMCOM BROADBAND SAS**
**92500 Rueil Malmaison (FR)**

(72) Inventeur: **SAMY, Roger**
**F-92500 Rueil Malmaison (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**US-A1- 2008 247 537**

• **LUKASZ ZBYDNIEWSKI ET AL: "Performance analysis of uncoded/coded windowed-OFDM and circular wavelet-OFDM transmission in PLC channel with bit-loading" SIGNALS AND ELECTRONIC SYSTEMS, 2008. ICSES '08. INTERNATIONAL CONFERENCE ON, IEEE, PISCATAWAY, NJ, USA, 14 septembre 2008 (2008-09-14), pages 423-426, XP031361799 ISBN: 9788388309472**
• **AKIYAMA Y ET AL: "Influence of a PLC signal induced i.nto the modem on the communication performance of VDSL" ELECTROMAGNETIC COMPATIBILITY, 2003. EMC '03. 2003 IEEE INTERNATIONAL SYMPOSIUM ON ISTANBUL, TURKEY 11-16 MAY 2003, PISCATAWAY, NJ, USA,IEEE, vol. 1, 11 mai 2003 (2003-05-11), pages 197-200, XP010795657 ISBN: 9780780377790**

**Description**

La présente invention concerne un procédé et un dispositif d'annulation des interférences entre un signal porté par une ligne courant porteur d'un système de distribution de services numériques chez un abonné et un signal porté par une ligne téléphonique dudit système qui est située à proximité de la ligne courant porteur.

Il est largement connu que des services numériques, tels que l'accès à Internet, la téléphonie par Internet ou encore la télévision haute définition, qui sont souvent regroupés par les opérateurs sous une offre appelée triple-display, sont distribués chez un abonné à la fois par le réseau téléphonique privé mais également par le réseau électrique privé.

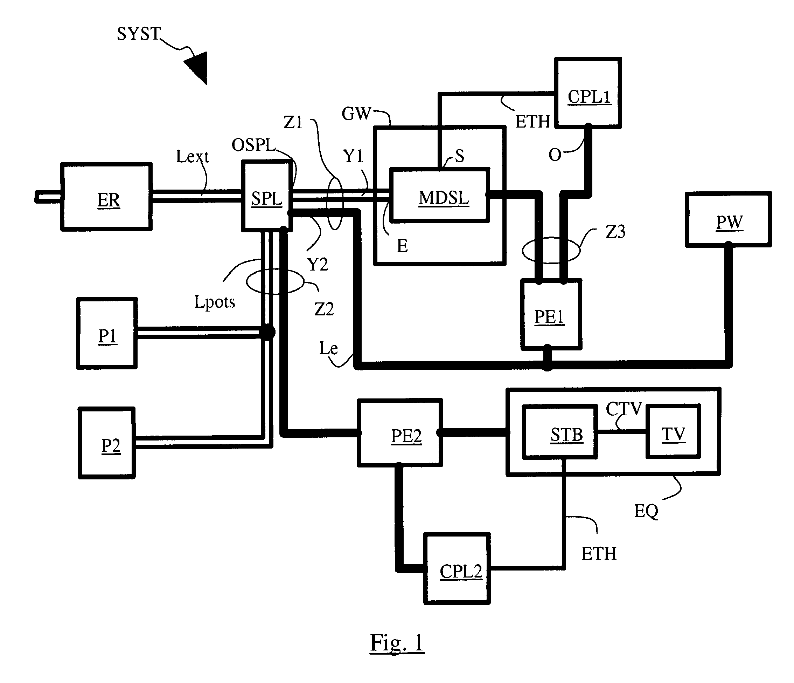

La Fig. 1 représente un exemple d'un système de distribution chez un abonné de services numériques.

Le système SYST comporte un équipement réseau ER situé à la terminaison de la boucle locale. Dans le cas où une technologie de type DSL (Digital Subscribe Line) est utilisée, cet équipement est communément appelé DSLAM (Digital Subscriber Line Acess Multiplexer). Cet équipement réseau a pour fonction de regrouper le trafic des données transitant sur les lignes téléphoniques qui lui sont raccordées, et de rediriger ce trafic vers le réseau Internet une fois les différentes données multiplexées temporellement. L'équipement réseau ER effectue bien évidemment l'opération inverse qui consiste à dé-multiplexer les données de trafic qui lui arrivent et qui sont destinées à un abonné et à acheminer un signal porteur de ces données via une ligne téléphonique Lext jusqu'à l'installation domestique de l'abonné. Généralement, la ligne Lext est formée d'une paire de câbles de cuivre représentée schématiquement sur la Fig. 1 par deux traits parallèles.

L'installation domestique de l'abonné peut comporter des postes téléphoniques P1 et P2 qui sont reliés à un réseau téléphonique privé formé d'une paire de câbles de cuivre schématiquement représenté sur la Fig. 1 par deux traits parallèles et désigné comme étant une ligne Lpots. Les postes P1 et P2 sont reliés à la ligne Lext via la ligne Lpots soit au travers de filtres dont la fonction est de ne laisser passer que les signaux de téléphonie, soit au travers d'un séparateur SPL (Master splitter en anglais) qui centralise cette fonction de filtrage.

L'installation domestique de l'abonné comporte également une passerelle GW qui est prévue pour recevoir le signal porté par la ligne Lext sur l'un de ses ports E. Le port E de la passerelle GW peut être soit relié directement à la ligne Lext soit à un port OSPL du séparateur SPL.

La passerelle GW comporte un modem MDSL qui est relié au port E de la passerelle GW et à un autre port S de type Ethernet de la passerelle GW.

Le type du modem MDSL dépend du procédé de codage des données qui est utilisé. Habituellement, une technologie de type DSL, et plus particulièrement la technologie VDSL2 (Very high bit rate DSL en anglais), est utilisée. Les technologies de type DSL utilisent un procédé de codage multiporteuses de type OFDM (Orthogonal Frequency Division Multiplexing en anglais). Le principe de ce procédé de codage consiste à répartir les bits de chaque symbole OFDM à transmettre sur des fréquences de porteuse qui sont orthogonales entre elles et qui sont réparties dans une bande de fréquences réservée qui est, en l'occurrence de 2 à 30 Mhz pour la technologie VDSL2.

La particularité du système de distribution de la Fig. 1 vient de l'utilisation du réseau électrique existant chez l'abonné, représenté schématiquement sur la Fig. 1 par la ligne Le, pour acheminer le signal porté par la ligne Lext vers les différents équipements de l'abonné qui peuvent ainsi être très éloignés physiquement de la passerelle GW.

On parle alors de ligne courant porteur (CPL) ou de PLC (Power Line Communication) ou BPL (Broadband for Power Line) qui est mise en oeuvre sur le réseau électrique privé existant.

Une ligne courant porteur CPL peut être, par exemple, conforme à la norme HomeplugAV, ou ITU G.hn par exemple ou basée sur la technologie développée par les sociétés UPA/OPERA ou Panasonic.

Ces technologies utilisent le procédé de codage multiporteuses de type OFDM (Orthogonal Frequency Division Multiplexing en anglais) sur une bande de fréquences réservée allant de 2 à 30 Mhz ou prochainement de 1 à 80 Mhz pour la norme ITU G.hn.

La mise en oeuvre de la technologie CPL requiert l'usage de modems particuliers qui sont reliés au réseau électrique.

Selon la Fig.1, deux modems CPL1 et CPL2 sont représentés à titre d'illustration.

Le modem CPL1 est relié, d'une part, au port S de la passerelle GW via par exemple un câble Ethernet ETH et, d'autre part, à une prise électrique PE1 du réseau électrique privé qui est située à proximité de la passerelle GW.

Le modem CPL2 est relié, d'une part, à un équipement EQ1 de l'abonné et, d'autre part, à une autre prise PE2 du réseau électrique privé qui est située à proximité de l'équipement EQ1.

Par exemple, l'équipement EQ1 est une *set top box* STB qui comprend un décodeur de flux vidéo et qui est reliée à un poste de télévision TV par un câble vidéo CTV.

Ainsi, les données portées par le signal à destination de l'équipement EQ1, sont acheminées depuis l'équipement réseau ER jusqu'au modem CPL1 via la ligne Lext et la passerelle GW. Le modem CPL1 obtient alors un signal de type CPL qui est porteur de ces données. Ce signal est alors accessible à partir de n'importe quelle prise électrique du réseau électrique privé et notamment de la prise électrique PE2 sur laquelle est branché le modem CPL2. Le modem CPL2 obtient alors un signal à partir de ce signal CPL et l'achemine jusqu'à l'équipement EQ1 via une liaison de type Ethernet ETH.

Il a été observé que lorsque les technologies de type DSL (ou autre) et CPL étaient mises en oeuvre à l'intérieur d'une même installation domestique, les signaux portés par le réseau électrique et par le réseau téléphonique interfèrent généralement les uns avec les autres.

En effet, comme ces technologies utilisent la même bande de fréquences, et le même principe de codage des données, en l'occurrence OFDM, et que les lignes téléphoniques Lpots sont souvent à proximité des lignes électriques Le, telles que illustrées à la Fig. 1 par les zones Z1 et Z2, les signaux portés par ces lignes interfèrent par radiation les uns avec les autres.

De plus, comme la passerelle GW et le modem CPL1 doivent être situés à proximité l'un de l'autre et que les modems MDSL et CPL1 doivent être alimentés électriquement, il est courant que l'alimentation de ces deux modems se fasse à partir d'une même branche du réseau électrique domestique, c'est-à-dire alimentés par une source électrique PW, ce qui provoque des interférences par conduction entre ces deux modems.

Ces deux types d'interférences ont pour conséquence de polluer les signaux portés à la fois par la ligne téléphonique Lpots et par la ligne électrique Le, pollution qui se traduit, notamment, par des pertes de débit au niveau de la transmission du signal porté par la ligne téléphonique Lpots.

La demande américaine US2008/247537 décrit un procédé d'annulation des interférences entre un signal porté par une ligne courant porteur d'un système de distribution de services numériques chez un abonné et un signal porté par une ligne téléphonique dudit système qui est située à proximité de la ligne courant porteur. Ce procédé consiste à obtenir le signal porté par la ligne courant porteur, à le filtrer pour obtenir une estimée du signal qui perturbe le signal porté par la ligne téléphonique et à soustraire cette estimée au signal porté par la ligne téléphonique.

L'un des buts de la présente invention est d'annuler les interférences entre le signal porté par le réseau téléphonique et le signal porté par le réseau électrique.

A cet effet, selon l'un de ses aspects, la présente invention concerne un procédé d'annulation des interférences entre un signal porté par une ligne courant porteur et un signal porté par une ligne téléphonique qui consiste à obtenir le signal porté par la ligne courant porteur, à le filtrer pour obtenir une estimée du signal qui perturbe le signal porté par la ligne téléphonique et à soustraire cette estimée au signal porté par la ligne téléphonique.

Ainsi, le signal obtenu à partir de la ligne courant porteur, une fois filtré, est une modélisation du signal porté par la ligne courant porteur qui interfère sur le signal porté par la ligne téléphonique. La soustraction de ce signal modélisé au signal porté par la ligne téléphonique supprime alors les interférences du signal porté par la ligne courant porteur sur le signal porté par le réseau téléphonique.

Selon un mode de réalisation, des symboles de données $X_i$ de même nature avec $i$ = (1,2) étant obtenus par un procédé de codage multi-porteuses et émis sur lesdites

lignes courant porteur et téléphoniques, l'estimée $\hat{X}_2$ du symbole sur la ligne courant porteur qui perturbe le symbole porté par la ligne téléphonique est donnée par

$$\begin{pmatrix} \hat{X}_1 \\ \hat{X}_2 \end{pmatrix} = \left( H^T H \right)^{-1} H^T \begin{pmatrix} Y_1 \\ Y_2 \end{pmatrix}$$

dans laquelle T est le transposé d'une matrice $H$ dont les coefficients sont des nombres complexes qui modélisent les canaux de transmission des symboles sur lesdites lignes ainsi que leurs interférences par des canaux de Rayleigh indépendants les uns des autres et variant chacun dans le temps, et la soustraction de ladite estimée du symbole porté par la ligne téléphonique est donnée par

$$Y_1 - h_{1,2}\hat{X}_2$$

dans laquelle $h_{1,2}$ est le nombre complexe relatif au canal de Rayleigh modélisant les interférences du symbole $X_2$ émis sur la ligne courant porteur sur le symbole $Y_1$ porté par la ligne téléphonique.

Le procédé comporte une première étape au cours de laquelle les nombres complexes de la matrice qui sont relatifs au canal de transmission sur la ligne courant porteur sont déterminés en forçant à zéro le signal porté par la ligne courant porteur et une seconde étape au cours de laquelle les nombres complexes qui sont relatifs au canal de la ligne téléphonique sont déterminés en émettant un signal sur la ligne téléphonique et en considérant les nombres complexes du canal de transmission de la ligne courant porteur déterminés à la première étape.

Selon un autre de ses aspects, la présente invention concerne un dispositif d'annulation des interférences entre un signal porté par une ligne courant porteur d'un système de distribution de services numériques chez un abonné décrit en relation avec la Fig. 1.

Le dispositif comporte un filtre adaptatif relié à la ligne courant porteur, de préférence entre un modem courant porteur et une prise électrique et un montage à ampli large bande différentiel dont une entrée est reliée au filtre adaptatif et la sortie est reliée à la ligne téléphonique en amont de ladite passerelle.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente un exemple d'un système de distribution chez un abonné de services numériques,

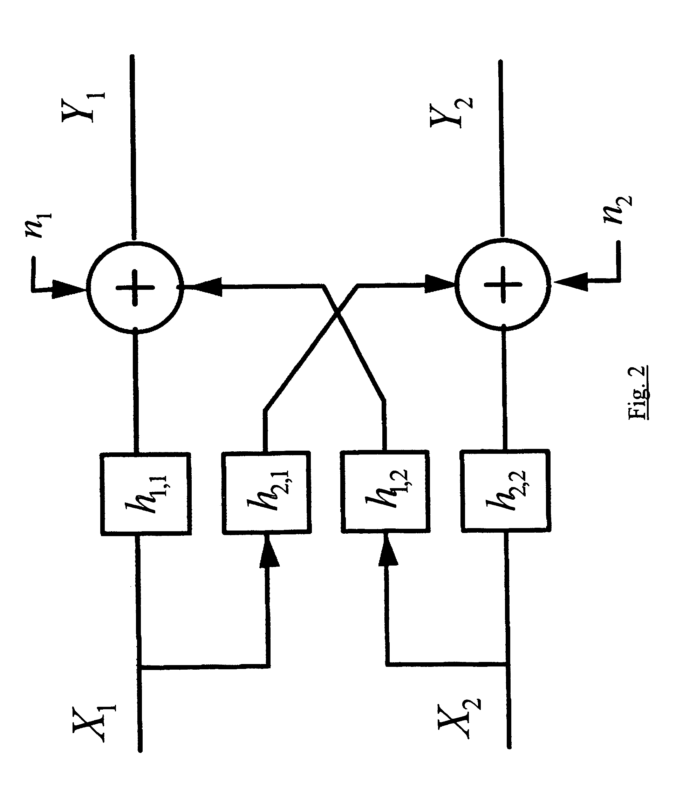

La Fig. 2 représente une illustration de la modélisation des interférences entre les signaux portés par les lignes électriques et téléphoniques d'une installation domestique, et

La Fig. 3 représente un exemple d'un système de distribution chez un abonné de services numériques selon l'invention.

L'invention porte sur un procédé d'annulation des interférences entre un signal porté par une ligne courant porteur d'un système de distribution de services numériques décrit dans la partie introductive et un signal porté par une ligne téléphonique dudit système qui est située à proximité de la ligne à courant porteur.

De manière générale, le procédé consiste à obtenir le signal porté par la ligne courant porteur, à le filtrer pour obtenir une estimée du signal qui perturbe le signal porté par la ligne téléphonique et à soustraire cette estimée au signal porté par la ligne téléphonique.

Par la suite, un mode de réalisation du procédé est décrit dans le cas où le signal porté par la ligne téléphonique est un signal conforme à la norme VDSL2 et le signal porté par la ligne électrique est un signal conforme à une technologie CPL. Ces deux signaux sont porteurs de symboles de même nature, en l'occurrence OFDM, et l'annulation des interférences entre les signaux est ainsi équivalente à l'annulation successive des interférences entre symboles OFDM relatifs à ces signaux. Ainsi, le procédé d'annulation des interférences selon l'invention peut être étendu à tout type de signaux qui portent des symboles de données qui sont de même nature et qui sont obtenus par des procédés de codage de données multi-porteuses.

Selon un mode de réalisation du procédé, les interférences mutuelles entre un symbole porté par la ligne Lpots et présent sur le port E de la passerelle GW, appelé $Y_1$, et un symbole porté par la ligne courant porteur, appelé $Y_2$, sont modélisées par les équations (1) et (2).

Chaque symbole $Y_1$ est modélisé par l'équation (1)

$$Y_1 = h_{1,1} X_1 + h_{1,2} X_2 + n_1 \qquad (1)$$

Chaque symbole présent sur le port O du modem CPL1 est modélisé par

$$Y_2 = h_{2,1} X_1 + h_{2,2} X_2 + n_2 \qquad (2)$$

Dans les équations (1) et (2), $n_i$ avec $i = \{1,2\}$ désigne un bruit additif dont la fonction de densité de probabilité gaussienne de moyenne nulle et d'écart type égal à $\dfrac{N_0}{2}$ est donnée par

$$p(n) = \frac{1}{\sqrt{\pi N_0}} e^{\left(\frac{-(n)^2}{N_0}\right)}$$

De plus, chaque symbole $X_i$, qui représente les symboles émis par une source, est considéré comme étant multiplié par un nombre complexe $h_{i,j}$ avec $j = \{1,2\}$ et $i \neq j$ dont la partie réelle et imaginaire est distribuée selon des distributions gaussiennes de moyenne nulle et d'écart type égal à ½.

En d'autres termes, les canaux de transmission des symboles OFDM sur lesdites lignes ainsi que leurs interférences sont modélisés par des canaux de Rayleigh indépendants les uns des autres et variant chacun dans le temps.

La variabilité dans le temps des canaux de Rayleigh et plus précisément des nombres complexes $h_{i,j}$ reflète la variabilité dans le temps des interférences qui est due, notamment, à la mise en fonctionnement ou à l'arrêt d'appareils électriques branchés sur le réseau électrique domestique.

En regroupant les équations (1) et (2), la modélisation des interférences mutuelles entre les symboles $Y_2$ et $Y_1$ est donnée par

$$Y = H.X + N \qquad (3)$$

avec $Y = \begin{pmatrix} Y_1 \\ Y_2 \end{pmatrix}$, $H = \begin{bmatrix} h_{1,1} & h_{1,2} \\ h_{2,1} & h_{2,2} \end{bmatrix}$, $X = \begin{pmatrix} X_1 \\ X_2 \end{pmatrix}$ et $N = \begin{pmatrix} n_1 \\ n_2 \end{pmatrix}$

Les canaux de Rayleigh sont habituellement utilisés pour la modélisation des canaux de transmission et des interférences entre symboles dans le cas d'une transmission dite MIMO (Multiple Input Multiple Output). Toutefois, la modélisation de canaux de type MIMO et de type CPL/VDSL se distingue car les canaux ne sont pas de même nature.

Dans une transmission MIMO, les symboles sont émis et reçus par plusieurs antennes. Chaque signal émis par antenne parcourt des trajets multiples avant d'être reçu par au moins une des antennes du récepteur. En réception, plusieurs signaux sont donc reçus pour un signal émis par une antenne. Il en résulte donc que chaque antenne reçoit plusieurs signaux décalés dans le temps par signal émis. Ces signaux sont également atténués par les affaiblissements naturels du canal radio et des interférences entre symboles se produisent également.

Les canaux de Rayleigh modélisent alors ce type de canaux de transmission qui présentent des décalages temporels et atténuations aléatoires.

La transmission MIMO permet d'augmenter les performances de transmission de symboles par utilisation de la diversité d'antennes. Pour cela, les signaux reçus doivent subir des traitements pour notamment supprimer les interférences entre symboles. Il existe de tels traitements qui, en se basant sur une modélisation des canaux de transmission par des canaux de Rayleigh, permettent de supprimer ces interférences entre les symboles.

Ces traitements sont conditionnés au fait que les signaux, bien que décalés entre eux, sont tous synchronisés sur une même horloge.

Dans le cas de transmission CPL et VDSL, les signaux de type CPL et DSL ne sont pas synchronisés selon une même horloge rendant inopérants les traitements classiquement utilisés dans une transmission MIMO pour supprimer les interférences entre symboles. En effet, les signaux de type CPL sont tous alignés temporellement sur le réseau électrique tandis que les signaux de type DSL sont tous alignés temporellement sur une même horloge du DSLAM.

De plus, les signaux de type CPL qui sont transmis sur le réseau électrique sont atténués par les différents appareils domestiques qui sont branchés sur ce réseau électrique. Ainsi, la transmission de symboles OFDM sur un réseau électrique présente l'inconvénient que certaines fréquences, dites sélectives, sont très fortement atténuées lorsque, par exemple, des appareils domestiques de type capacitif sont branchés sur ce réseau électrique. Des algorithmes de type « Water-filling » ont été élaborés pour attribuer les bits des symboles à transmettre sur des fréquences porteuses les moins atténuées en évitant à tout prix d'émettre sur les fréquences sélectives.

Une estimée $\ddot{X}_i$ des symboles émis $X_i$ est alors obtenue par l'équation (4)

$$\begin{pmatrix} \ddot{X}_1 \\ \ddot{X}_2 \end{pmatrix} = \left( H^T H \right)^{-1} H^T \begin{pmatrix} Y_1 \\ Y_2 \end{pmatrix} \qquad (4)$$

dans laquelle un filtre est défini par les coefficients de la matrice

$$\left( H^T H \right)^{-1} H^T$$

avec T le transposé d'une matrice et $(H^T H)^{-1}$ la matrice pseudo-inverse de la matrice $H$. Ainsi, le filtre est déterminé une fois que les nombres complexes $h_{i,j}$ sont connus.

Le procédé d'annulation des interférences se termine par la soustraction de l'estimée $\ddot{X}_2$ du symbole $Y_1$. Le résultat de la soustraction est donné par:

$$\begin{pmatrix} Y_1 - h_{1,2}\ddot{X}_2 \\ Y_2 - h_{2,2}\ddot{X}_2 \end{pmatrix} = \begin{pmatrix} h_{1,1}X_1 + n_1 \\ h_{2,1}X_1 + n_2 \end{pmatrix} \qquad (5)$$

L'équation (5) montre qu'en soustrayant l'estimée $\ddot{X}_2$ du symbole $Y_1$ présent sur le port E de la passerelle GW, c'est-à-dire à l'entrée du modem MDSL, l'interférence du symbole $X_2$ émis sur le symbole $Y_1$ est annulée.

Ainsi, le signal porté par la ligne courant porteur, c'est-à-dire par le réseau électrique privé, n'interfère plus sur le signal porté par la ligne téléphonique, c'est-à-dire le réseau téléphonique.

Selon un mode de réalisation du procédé, les nombres complexes $h_{i,j}$ sont déterminés en deux étapes.

Au cours d'une étape 1, les nombres complexes $h_{1,2}$ et $h_{2,2}$, qui sont relatifs au canal de transmission sur la ligne courant porteur sont déterminés en forçant à zéro le signal porté par la ligne téléphonique, c'est-à-dire qu'il n'y a aucune communication de signaux entre l'équipement EQ1, la passerelle GW et l'équipement réseau ER.

Les nombres complexes $h_{1,2}$ et $h_{2,2}$ sont alors calculés pour que l'équation (6) soit vérifiée

$$\begin{pmatrix} Y_1 - h_{1,2}\ddot{X}_2 \\ Y_2 - h_{2,2}\ddot{X}_2 \end{pmatrix} = \begin{pmatrix} 0 \\ 0 \end{pmatrix} \qquad (6)$$

dans laquelle l'estimée $\ddot{X}_2$ est donnée par

$$\ddot{X}_2 = \left(H^T H\right)^{-1} H^T \begin{pmatrix} Y_1 \\ Y_2 \end{pmatrix}$$

Au cours d'une autre étape 2, les nombres complexes $h_{2,1}$ et $h_{1,1}$ qui sont relatifs au canal de transmission de la ligne téléphonique sont déterminés en émettant un signal sur la ligne téléphonique et en considérant les nombres complexes $h_{1,2}$ et $h_{2,2}$ déterminés à l'étape 1.

Les nombres complexes $h_{2,1}$ et $h_{1,1}$ sont alors calculés pour que l'équation (7) soit vérifiée

$$\begin{pmatrix} Y_1 - h_{1,2}\ddot{X}_2 \\ Y_2 - h_{2,2}\ddot{X}_2 \end{pmatrix} = \begin{pmatrix} h_{1,1}\ddot{X}_1 \\ h_{2,1}\ddot{X}_1 \end{pmatrix} \qquad (7)$$

dans laquelle les estimées $\ddot{X}_i$ sont données par l'équation (4).

A l'issue des étapes 1 et 2, le filtre est défini. Toutefois, lorsque le réseau électrique subit des variations dues à la mise en fonctionnement ou à l'arrêt d'appareils électriques, le signal porté par la ligne courant porteur et donc le symbole $Y_2$ subit des fluctuations. L'estimée des symboles donnée par l'équation (4) fluctue également, ce qui peut rendre obsolètes les valeurs des nombres complexes calculées au cours des étapes 1 et 2.

Selon une caractéristique de l'invention, le filtre est adaptatif, c'est-à-dire que les nombres complexes de la matrice $H$ sont mis à jour périodiquement selon les variations du canal de transmission de la ligne courant porteur. La valeur de la période est inférieure à celle des variations du canal de transmission la ligne courant porteur, typiquement de quelques secondes.

La mise à jour des nombres complexes de la matrice $H$ est réalisée en exécutant les étapes 1 et 2 périodiquement.

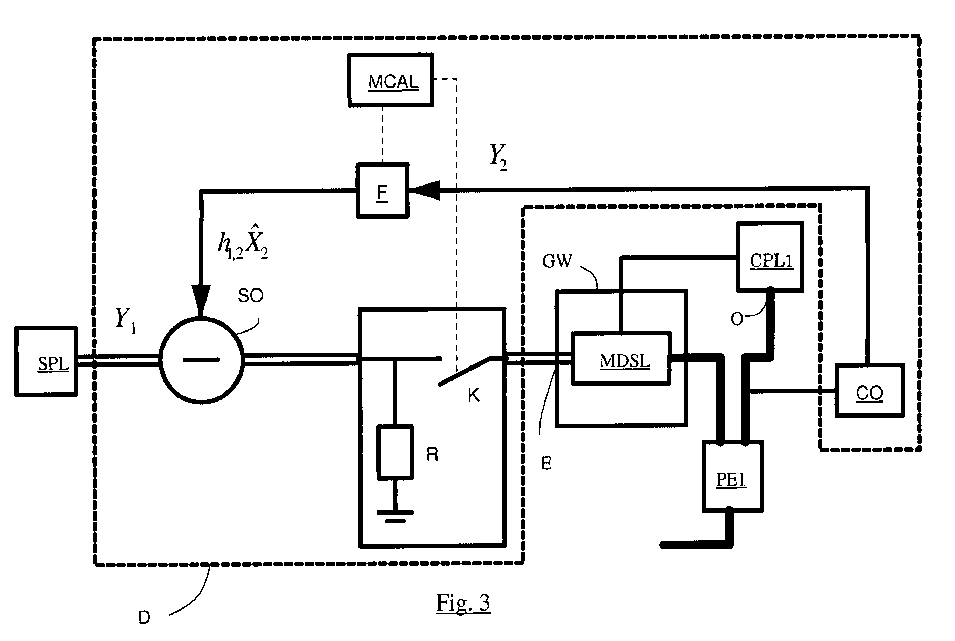

La Fig. 3 représente un exemple d'un système de distribution chez un abonné de services numériques selon l'invention.

Les références de la Fig. 3 qui portent des références identiques à celles de la Fig. 1 désignent les mêmes éléments. Par ailleurs, seuls certains éléments du système SYST de la Fig. 1 sont représentés sur la Fig. 3 pour des raisons de clarté. Il est toutefois évident que les éléments du système SYST qui ne sont pas représentés sur la Fig. 3 font tout de même partie du système de distribution de services numériques chez l'abonné selon l'invention.

Le système comporte un dispositif D qui met en oeuvre le procédé d'annulation des interférences entre un signal porté par la ligne Lpots et un signal porté par la ligne Le décrit précédemment.

Le dispositif D comporte un filtre adaptatif F et un montage en ampli large bande différentiel SO à deux entrées et une sortie.

Le montage en ampli large bande différentiel SO est monté en série sur la ligne téléphonique en amont de ladite passerelle, en l'occurrence au niveau du port E de la passerelle GW. Lorsque le système comporte un filtre relatif à chaque poste téléphonique P1 et P2, l'une des entrées du montage en ampli large bande différentiel SO est reliée à la ligne téléphonique. Lorsque le système comporte un séparateur SPL (tel que illustré sur la Fig. 1), cette entrée du montage en ampli large bande différentiel SO est reliée à un port du séparateur SPL.

L'entrée du filtre adaptatif F est reliée au réseau électrique, de préférence entre le modem CPL1 et la prise électrique PE1. La sortie du filtre F est reliée à l'autre entrée du montage en ampli large bande différentiel SO.

Le dispositif D comporte également un coupleur CO de même nature, en l'occurrence capacitif, que le coupleur du modem CPL1. Le coupleur CO qui est, de préférence, relié à une prise électrique située à proximité de la passerelle GW, a pour fonction de récupérer le signal porté par la ligne Le.

Le dispositif D comporte également des moyens commutables MC pour assurer qu'aucun signal ne soit échangé entre l'équipement EQ1, la passerelle GW et l'équipement réseau ER via le réseau téléphonique, et pour assurer une continuité d'impédance identique lors des étapes 1, 2 et du fonctionnement nominal du système.

Tel que illustré sur la Fig. 3, les moyens MC comportent un interrupteur K qui est monté en série entre la sortie du montage en ampli large bande différentiel SO et le port E de la passerelle GW.

Ainsi lors de l'étape 1, l'interrupteur K est en position ouverte et reste en position fermée lors de l'étape 2 mais également lors du fonctionnement nominal du système.

De plus, les moyens MC comportent une résistance R de valeur identique à l'impédance de charge vue du port de la passerelle E, par exemple de 100 ohms, qui relie une borne de l'interrupteur K à la masse.

Le dispositif D comporte également des moyens de contrôle MCAL qui mettent en oeuvre les calculs des étapes 1 et 2 et qui contrôlent l'ouverture et la fermeture de l'interrupteur K. Les moyens MCAL sont par exemple mis en oeuvre par un circuit électronique programmable.

## Revendications

**1.** Procédé d'annulation des interférences entre un signal porté par une ligne courant porteur d'un système de distribution de services numériques chez un abonné et un signal porté par une ligne téléphonique dudit système qui est située à proximité de la ligne courant porteur, des symboles de données $X_i$ de même nature avec $i = (1,2)$ étant obtenus par un procédé de codage multi-porteuses et émis sur lesdites lignes courant porteur et téléphonique, une estimée $\hat{X}_2$ du symbole sur la ligne courant porteur qui perturbe le symbole porté par la ligne téléphonique est donnée par

$$\begin{pmatrix} \hat{X}_1 \\ \hat{X}_2 \end{pmatrix} = \left( H^T H \right)^{-1} H^T \begin{pmatrix} Y_1 \\ Y_2 \end{pmatrix}$$

dans laquelle T est le transposé d'une matrice $H$ dont les coefficients sont des nombres complexes qui modélisent les canaux de transmission des symboles sur lesdites lignes ainsi que leurs interférences par des canaux de Rayleigh indépendants les uns des autres et variant chacun dans le temps, et une soustraction de ladite estimée du symbole porté par la ligne téléphonique étant donnée par

$$Y_1 - h_{1,2} \hat{X}_2$$

dans laquelle $h_{1,2}$ est le nombre complexe relatif au canal de Rayleigh modélisant les interférences du symbole $X_2$ émis sur la ligne courant porteur sur le symbole $Y_1$ porté par la ligne téléphonique, **caractérisé en ce que** ledit procédé comporte une première étape au cours de laquelle les nombres complexes de la matrice qui sont relatifs au canal de transmission sur la ligne courant porteur sont déterminés en forçant à zéro le signal porté par la ligne courant porteur et une seconde étape au cours de laquelle les nombres complexes qui sont relatifs au canal de la ligne téléphonique sont déterminés en émettant un signal sur la ligne téléphonique et en considérant les nombres complexes du canal de transmission de la ligne courant porteur déterminés à la première étape.

**2.** Procédé selon la revendication 1 **caractérisé en ce que**, au cours de la première étape, les nombres complexes relatifs au canal de transmission de la ligne courant porteur $h_{1,2}$ et $h_{2,2}$ sont déterminés par résolution de l'équation

$$\begin{pmatrix} Y_1 - h_{1,2}\hat{X}_2 \\ Y_2 - h_{2,2}\hat{X}_2 \end{pmatrix} = \begin{pmatrix} 0 \\ 0 \end{pmatrix}$$

et au cours de la seconde étape les nombres complexes relatifs au canal de transmission de la ligne téléphonique $h_{2,1}$ et $h_{1,1}$ sont déterminés par résolution de l'équation

$$\begin{pmatrix} Y_1 - h_{1,2}\hat{X}_2 \\ Y_2 - h_{2,2}\hat{X}_2 \end{pmatrix} = \begin{pmatrix} h_{1,1}\hat{X}_1 \\ h_{2,1}\hat{X}_1 \end{pmatrix}$$

**3.** Procédé selon l'une des revendications 1 ou 2, **caractérisé en ce que** la première et seconde étape sont répétées selon une période de temps définie selon les variations du canal de transmission de la ligne courant porteur.

**4.** Dispositif d'annulation des interférences entre un signal porté par une ligne courant porteur (Le) d'un système de distribution de services numériques chez un abonné et un signal porté par une ligne téléphonique (Lpots) dudit système qui est située à proximité de la ligne courant porteur, ledit système comportant une passerelle (GW) prévue pour recevoir le signal porté par la ligne téléphonique (Lpots) et un modem (CPL1) prévu pour convertir un signal transitant par la passerelle (GW) en un signal courant porteur acheminé par la ligne courant porteur (Le), le dispositif comportant un filtre adaptatif (F) relié à la ligne courant porteur (Le) et un montage à ampli large bande différentiel (SO) dont une entrée est reliée au filtre adaptatif (F) et la sortie est reliée à la ligne téléphonique (Lpots) en amont de ladite passerelle (GW), **caractérisé en ce qu'**il comporte des moyens commutables (MC) pour assurer qu'aucun signal ne soit échangé entre un équipement de l'abonné (EQ1), la passerelle (GW) et le réseau externe via la ligne téléphonique (Lpots), et pour assurer une continuité d'impédance identique lors de l'exécution des étapes de l'un des procédés de la revendication 1 à 3.

**5.** Dispositif selon la revendication 4, **caractérisé en ce que** lorsque le système comporte au moins un poste téléphonique (P1, P2) relié à la ligne téléphonique (Lpots) via un filtre, une autre entrée du montage en ampli large bande différentiel (SO) est reliée à la ligne téléphonique (Lpots), et lorsque le système comporte un séparateur (SPL) une autre entrée du montage en ampli large bande différentiel (SO) est reliée à un port du séparateur (SPL).

**6.** Dispositif selon la revendication 4 ou 5, **caractérisé en ce qu'**il comporte un coupleur (CO) de même nature que le coupleur du modem (CPL1) qui a pour fonction d'obtenir le signal porté par la ligne courant porteur (Le) et qui est, de préférence, relié à une prise électrique située à proximité de la passerelle (GW).

**7.** Dispositif selon l'une des revendications 4 à 6, **caractérisé en ce qu'**il comporte des moyens de contrôle (MCAL) qui mettent en oeuvre les calculs de l'un des procédés des revendications 1 à 3 et qui contrôlent lesdits moyens commutables (MC).

**Patentansprüche**

**1.** Verfahren zur Unterdrückung der Interferenzen zwischen einem von einer Trägerstromleitung eines Verteilersystems digitaler Dienste bei einem Teilnehmer getragenen Signal und einem von einer in der Nähe der Trägerstromleitung beendlichen Telefonleitung des Systems getragenen Signal, wobei Datensymbole $X_i$ gleicher Art mit i = (1,2) durch ein Mehrträger-Codierverfahren erhalten und auf den Trägerstrom- und Telefonleitungen gesendet werden, wobei ein Schätzwert $\hat{X}_2$ des Symbols auf der Trägerstromleitung, das das von der Telefonleitung getragene Symbol stört, gegeben ist durch

$$\begin{pmatrix} \hat{X}_1 \\ \hat{X}_2 \end{pmatrix} = \left( H^T H \right)^{-1} H^T \begin{pmatrix} Y_1 \\ Y_2 \end{pmatrix}$$

wobei T die Transponierte einer Matrix H ist, deren Koeffizienten komplexe Zahlen sind, die die Übertragungskanäle der Symbole auf den Leitungen sowie ihre Interferenzen durch voneinander unabhängige und je zeitlich variierende Rayleigh-Kanäle modellieren, und eine Subtraktion des Schätzwerts des von der Telefonleitung getragenen Symbols gegeben ist durch

$$Y_1 - h_{1,2} \hat{X}_2$$

wobei $h_{1,2}$ die komplexe Zahl bezüglich des Rayleigh-Kanals ist, der die Interferenzen des auf der Trägerstromleitung gesendeten Symbols $X_2$ auf das von der Telefonleitung getragene Symbol $Y_1$ modelliert, **dadurch gekennzeichnet, dass** das Verfahren einen ersten Schritt, während dem die sich auf den Übertragungskanal auf der Trägerstromleitung beziehenden komplexen Zahlen der Matrix bestimmt werden, indem das von der Trägerstromleitung getragene Signal auf Null gezwungen wird, und einen zweiten Schritt aufweist, während dem die sich auf den Kanal der Telefonleitung beziehenden komplexen Zahlen bestimmt werden, indem ein Signal auf der Telefonleitung gesendet wird, und indem die im ersten Schritt bestimmten komplexen Zahlen des Übertragungskanals der Trägerstromleitung berücksichtigt werden.

2. Verfahren nach Anspruch 1, **dadurch gekennzeichnet, dass** während des ersten Schritts die komplexen Zahlen bezüglich des Übertragungskanals der Trägerstromleitung $h_{1,2}$ und $h_{2,2}$ durch Lösung der folgenden Gleichung bestimmt werden

$$\begin{pmatrix} Y_1 - h_{1,2}\hat{X}_2 \\ Y_2 - h_{2,2}\hat{X}_2 \end{pmatrix} = \begin{pmatrix} 0 \\ 0 \end{pmatrix}$$

und während des zweiten Schritts die komplexen Zahlen bezüglich des Übertragungskanals der Telefonleitung $h_{2,1}$ und $h_{1,1}$ durch Lösung der folgenden Gleichung bestimmt werden

$$\begin{pmatrix} Y_1 - h_{1,2}\hat{X}_2 \\ Y_2 - h_{2,2}\hat{X}_2 \end{pmatrix} = \begin{pmatrix} h_{1,1}\hat{X}_1 \\ h_{2,1}\hat{X}_1 \end{pmatrix}$$

3. Verfahren nach einem der Ansprüche 1 oder 2, **dadurch gekennzeichnet, dass** der erste und der zweite Schritt gemäß einem entsprechend den Änderungen des Übertragungskanals der Trägerstromleitung definierten Zeitraum wiederholt werden.

4. Vorrichtung zur Unterdrückung der Interferenzen zwischen einem von einer Trägerstromleitung (Le) eines Verteilersystems digitaler Dienste bei einem Teilnehmer getragenen Signal und einem von einer in der Nähe der Trägerstromleitung befindlichen Telefonleitung (Lpots) des Systems getragenen Signal, wobei das System ein Gateway (GW), das vorgesehen ist, um das von der Telefonleitung (Lpots) getragene Signal zu empfangen, und ein Modem (CPL1) aufweist, das vorgesehen ist, um ein durch das Gateway (GW) gehendes Signal in ein von der Trägerstromleitung (Le) befördertes Trägerstromsignal umzuwandeln, wobei die Vorrichtung ein mit der Trägerstromleitung (Le) verbundenes adaptives Filter (F) und einen Aufbau mit differentiellem Breitbandverstärker (SO) aufweist, von dem ein Eingang mit dem adaptiven Filter (F) und der Ausgang mit der Telefonleitung (Lpots) vor dem Gateway (GW) verbunden ist, **dadurch gekennzeichnet, dass** sie umschaltbare Einrichtungen (MC) aufweist, um zu gewährleisten, dass kein Signal zwischen einem Teilnehmergerät (EQ1), dem Gateway (GW) und dem externen Netzwerk über die Telefonleitung (Lpots) ausgetauscht wird, und um eine gleiche Impedanzkontinuität bei der Ausführung der Schritte eines der Verfahren des Anspruchs 1 bis 3 zu gewährleisten.

5. Vorrichtung nach Anspruch 4, **dadurch gekennzeichnet, dass**, wenn das System mindestens einen Telefonapparat (P1, P2) aufweist, der mit der Telefonleitung (Lpots) über ein Filter verbunden ist, ein anderer Eingang des Aufbaus mit differentiellem Breitbandverstärker (SO) mit der Telefonleitung (Lpots) verbunden ist, und wenn das System einen Separator (SPL) aufweist, ein anderer Eingang des Aufbaus mit differentiellem Breitbandverstärker (SO) mit einem Anschluss des Separators (SPL) verbunden ist.

6. Vorrichtung nach Anspruch 4 oder 5, **dadurch gekennzeichnet, dass** sie einen Koppler (CO) gleicher Art wie der Koppler des Modems (CPL1) aufweist, der die Funktion hat, das von der Trägerstromleitung (Le) getragene Signal zu erhalten und der vorzugsweise mit einer in der Nähe des Gateways (GW) befindlichen Steckdose verbunden ist.

7. Vorrichtung nach einem der Ansprüche 4 bis 6, **dadurch gekennzeichnet, dass** sie Steuereinrichtungen (MCAL) aufweist, die die Berechnungen eines der Verfahren der Ansprüche 1 bis 3 anwenden, und die die umschaltbaren Einrichtungen (MC) steuern.

**Claims**

1. A method of cancelling interference between a signal carried by a powerline communications line in a digital service distribution system at subscriber's premises and a signal carried by a telephone line of said system which is situated close to the communications line, data symbols $X_i$ of same nature with $i = (1,2)$ being obtained by a multicarrier coding method and sent over said powerline communications and telephone lines, an estimate $\hat{X}_2$ of the symbol on the powerline communications line that interferes with the symbol carried by the telephone line is given by

$$\begin{pmatrix} \hat{X}_1 \\ \hat{X}_2 \end{pmatrix} = \left( H^T H \right)^{-1} H^T \begin{pmatrix} Y_1 \\ Y_2 \end{pmatrix}$$

in which T is the transpose of a matrix $H$ the coefficients of which are complex numbers that model the transmission channels of the symbols over said lines as well as interference thereon by Rayleigh channels independent of one another and each varying in time, and a subtraction of said estimate of the symbol carried by the telephone line being given by

$$Y_1 - h_{1,2}\hat{X}_2$$

in which $h_{1,2}$ is the complex munber relating to the Rayleigh channel modelling the interference of the symbol $X_2$ sent over the powerline communications line with the symbol $Y_1$ carried by the telephone line, **characterised in that** said method comprises a first step in which the complex numbers of the matrix that relate to the transmission channel of the powerline communications line are determined by forcing to zero the signal carried by the powerline communications line and a second step during which the complex numbers that relate to the channel of the telephone line are determined by sending a signal over the telephone line and considering the complex numbers of the transmission channel of the powerline communications line determined in the first step.

2. The method according to claim 1, **characterised in that**, in the first step, the complex numbers relating to the transmission channel of the powerline communications line $h_{1,2}$ and $h_{2,2}$ are determined by solving the equation

$$\begin{pmatrix} Y_1 - h_{1,2}\hat{X}_2 \\ Y_2 - h_{2,2}\hat{X}_2 \end{pmatrix} = \begin{pmatrix} 0 \\ 0 \end{pmatrix}$$

and, in the second step, the complex numbers relating to the transmission channel of the telephone line $h_{2,1}$ and $h_{1,1}$ are determined by solving the equation

$$\begin{pmatrix} Y_1 - h_{1,2}\hat{X}_2 \\ Y_2 - h_{2,2}\hat{X}_2 \end{pmatrix} = \begin{pmatrix} h_{1,1}\hat{X}_1 \\ h_{2,1}\hat{X}_1 \end{pmatrix}$$

3. The method according to one of claims 1 or 2, **characterised in that** the first and second steps are repeated according to a period of time defined according to the variations in the transmission channel of the powerline communications line.

4. A device for cancelling interference between a signal carried by a powerline communications line (Le) of a digital service distribution system at subscriber's premises and a signal carried by a telephone line (Lpots) of said system which is situated close to the powerline communications line, said system comprising a gateway (GW) designed to receive the signal carried by the telephone line (Lpots) and a modem (CPL1) designed to convert a signal passing through the gateway (GW) into a powerline communications signal routed by the powerline communications line (Le), the device comprising an adaptive filter (F) connected to the powerline communications line (Le) and a differential wide-band amplifier circuit (SO) one input of which is connected to the adaptive filter (F) and the output of which is connected to the telephone line (Lpots) upstream of said gateway (GW), **characterised in that** it comprises switchable means (MC) for ensuring that no signal is exchanged between an item of equipment of the subscriber (EQ1), the gateway (GW) and the external network via the telephone line (Lpots), and to ensure identical impedance continuity when executing the steps of one of the methods of claims 1 to 3.

5. The device according to claim 4, **characterised in that**, when the system comprises at least one telephone set (P1, P2) connected to the telephone line (Lpots) via a filter, another input of the differential wide-band amplifier circuit (SO) is connected to the telephone line (Lpots) and, when the system comprises a separator (SPL), another input of the differential wide-band amplifier circuit (SO) is connected to a port of the separator (SPL).

6. The device according to claim 4 or 5, **characterised in that** it comprises a coupler (CO) of same nature as the coupler of the modem (CPL1), the function of which is to obtain the signal carried by the powerline communications line (Le) and which is preferably connected to an electric socket situated close to the gateway (GW).

7. The device according to one of claims 4 to 6, **characterised in that** it comprises control means (MCAL) that perform the computations of one of the methods according to claims 1 to 3 and that control said switchable means (MC).

EP 2 409 412 B1

Fig. 1

Fig. 2

Fig. 3

EP 2 409 412 B1

**EP 2 409 412 B1**

## RÉFÉRENCES CITÉES DANS LA DESCRIPTION

### Documents brevets cités dans la description

- US 2008247537 A